# EUROPEAN PATENT APPLICATION

(11) **EP 2 476 543 A2**
(43) Date of publication of application: **18.07.2012**
(21) Application number: 11250430.3
(22) Date of filing: 05.04.2011
(51) Int. Cl.: B29D 11/00

(54) **Method of manufacturing lens**

(30) Priority: 12.01.2011 KR 20110003220
(71) Applicant: Samsung Electro-Mechanics Co., Ltd., Gyeonggi-do (KR)
(72) Inventor: Lee, Kwang Chun, Gyunggi-do (KR); Jin, Young Su, Gyunggi-do (KR); Oh, Hye Ran, Gyunggi-do (KR)
(74) Representative: Powell, Timothy John

(57) **Abstract**

There is provided a method of manufacturing a lens, including: forming a first lens layer (110) having a protrusion (1122) and a groove part (1124) formed on a first surface (112) thereof; forming a light shielding layer (130) on the first surface; and forming a second lens layer (120) on the first surface.

## Description

### CROSS-REFERENCE TO RELATED APPLICATIONS

This application claims the priority of Korean Patent Application No. 10-2011-0003220 filed on January 12, 2011 in the Korean Intellectual Property Office, the disclosure of which is incorporated herein by reference.

### BACKGROUND OF THE INVENTION

### Field of the Invention

The present invention relates to a method of manufacturing a lens, and more particularly, to a method of manufacturing a lens integrated with a light shielding layer.

### Description of the Related Art

A small lens or a small lens module has a light shielding member (alternatively, a light shielding layer). The light shielding member allows for the imaging of effective light alone among light reflected from a subject on an image sensor or an image module.

When the center of the light shielding member does not coincide with an optical axis of the lens, the effective light may not be transmitted to a lens surface as it is. This has an effect on the shape of the subject imaged on the image sensor, which is considered to be a very important factor in image formation.

Meanwhile, the light shielding member is formed together with the lens during a process of stacking lenses, or is fixed to one surface of the lens by using of an adhesive.

However, in using the former method, it is hard to fix the position of the light shielding member and thus, it is hard to accurately install the light shielding member. On the other hand, it is easy to fix the position of the light shielding member in using the latter method; however, the refractive index or the shape of the lens surface may easily be deformed by adhesive onflowing on the lens surface.

For this reason, a lens module of a type in which the light shielding member is disposed between the lenses, rather than being disposed in the lens, has mainly been used.

### SUMMARY OF THE INVENTION

An aspect of the present invention provides a method of manufacturing a lens capable of forming a light shielding layer to be integrated with the lens.

According to an aspect of the present invention, there is provided a method of manufacturing a lens, the method including: forming a first lens layer having a protrusion and a groove part formed on a first surface thereof; forming a light shielding layer on the first surface; and forming a second lens layer on the first surface.

The light shielding layer may be formed on the groove part of the first surface.

The light shielding layer may be formed on the protrusion of the first surface.

The light shielding layer may be formed by spraying, printing, or squeezing a light shield material onto the first surface.

In the forming of the light shielding layer, a light shielding material may be sprayed, printed, or squeezed onto a stamp or a mold having a shape corresponding to the first surface, and the first surface and the light shielding layer are formed by using the stamp or the mold.

The light shield layer may be a structure capable of being inserted into the protrusion or the groove part.

According to another aspect of the present invention, there is provided a method of manufacturing a lens, the method including: forming a first lens layer; forming a light shield layer on a first surface of the first lens layer; and forming a second lens layer on the first surface.

The forming of the light shield layer may include: applying a light shield material to a stamp or a mold forming the first surface; and pressurizing the first lens layer by the stamp or the mold to simultaneously form the first surface of the first lens layer and the light shielding layer.

In the forming of the light shield layer, a light shielding member provided with holes corresponding to a lens surface may be mounted on one surface of the first lens layer.

The first lens layer and the second lens layer may be made of the same material.

### BRIEF DESCRIPTION OF THE DRAWINGS

The above and other aspects, features and other advantages of the present invention will be more clearly understood from the following detailed description taken in conjunction with the accompanying drawings, in which:

FIGS. 1A to 1E are a diagram showing a method of manufacturing a lens according to a first exemplary embodiment of the present invention;

FIGS. 2A to 2C are a diagram specifically showing an example of forming a light shielding layer shown in FIGS. 1A to 1E;

FIGS. 3A to 4D are diagrams respectively showing a method of manufacturing a lens according to a second exemplary embodiment of the present invention;

FIGS. 5A to 5E are a diagram showing a method of manufacturing a lens according to a third exemplary embodiment of the present invention; and

FIGS. 6A to 6E are a diagram showing a method of manufacturing a lens according to a fourth exemplary embodiment of the present invention.

### DETAILED DESCRIPTION OF THE PREFERRED EMBODIMENT

Hereinafter, exemplary embodiments will be described in detail with reference to the accompanying drawings. In describing the present invention, the following terms are defined in consideration of the functions in the present invention and may be construed in different ways by the intention of users and operators. Therefore, the terms should not be construed as being limited to the technical components of the present invention.

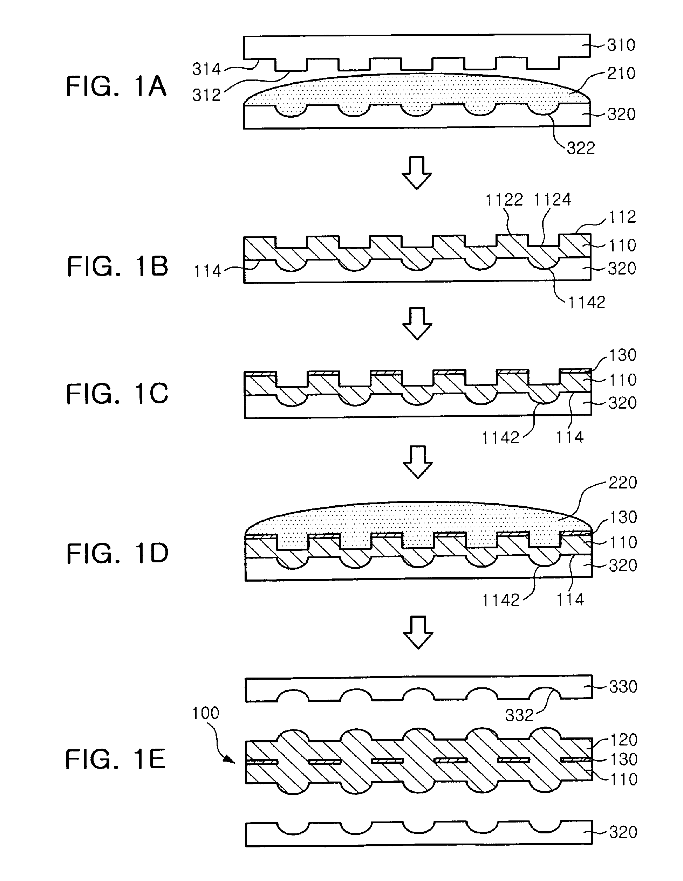

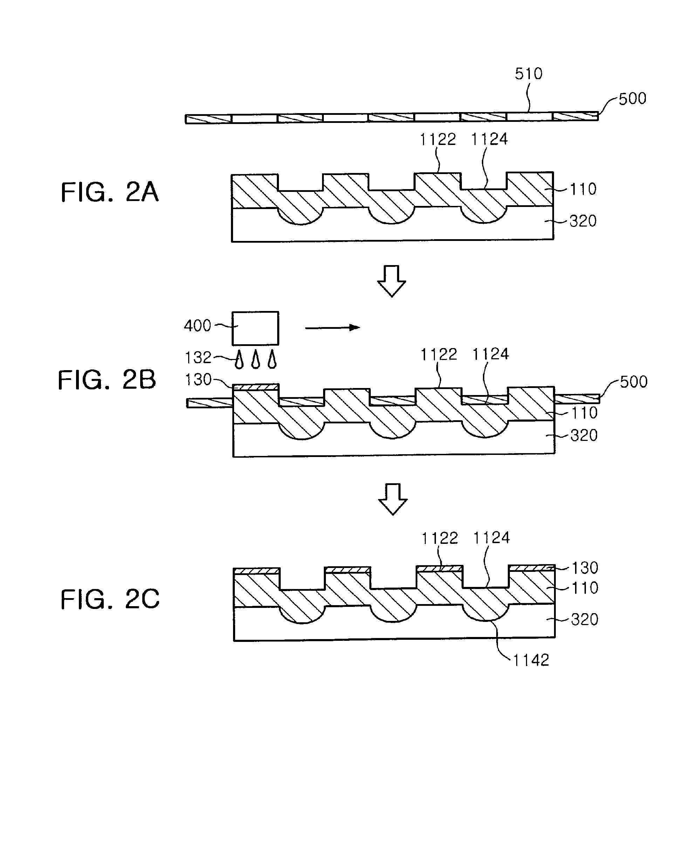

A method of manufacturing a lens according to a first exemplary embodiment of the present invention will be described with reference to FIGS. 1A to 2C. FIGS. 1A to 1E are a diagram showing a method of manufacturing a lens according to a first exemplary embodiment of the present invention and FIGS. 2A to 2C are a diagram specifically showing an example of forming a light shielding layer shown in FIGS. 1A to 1E.

The method of manufacturing a lens according to the first exemplary embodiment of the present invention includes forming a first lens layer 110, forming a light shielding layer 130, and forming a second lens layer 120.

### 1) Forming First Lens Layer 110

The first lens layer 110 is formed by a first mold 310 and a second mold 320. The first lens layer 110 is made of a first lens material 210 and has a first refractive index. In this configuration, the first lens material 210 may be a material cured by heat or light.

The first mold 310 has a protrusion 312 and a groove part 314 formed on one surface (a surface faced to the second mold 320) thereof and forms a first surface 112 of the first lens layer 110. The protrusion 312 allows the first lens layer 110 to have a groove part 1124 formed thereon and the groove part 314 allows the first lens layer 110 to have a protrusion 1122 formed thereon.

The second mold 320 has a lens surface forming part 322 formed on one surface (a surface faced to the first mold 310) thereof. The lens surface forming part 322 forms a second surface 114 of the first lens layer 110.

In this configuration, the first mold 310 and the second mold 320 may be made of a material facilitating heat transfer or a transparent material capable of transmitting light (in particular, infrared rays). The materials of the molds 310 and 320 may be changed according to the first lens material 210 forming the first lens layer 110. For example, when the first lens material 210 is a photocurable material, at least one of the molds 310 and 320 may be a transparent material.

The first lens layer 110 is manufactured as follows.

The first lens material 210 is injected between the first mold 310 and the second mold 320 or is applied to the second mold 320. Thereafter, the first lens material 210 is compressed by the first mold 310 and the second mold 320, and the compressed first lens material 210 is cured by applying heat or irradiating light thereto. Then, the first lens layer 110 is formed as shown in FIG. 1B.

In the first lens layer 110 completed as above, the first surface 112 thereof is provided with a plurality of protrusions 1122 and a plurality of groove parts 1124, and the second surface 114 thereof is provided with a first lens surface 1142. In this configuration, the first lens surface 1142 of the first lens layer 110 may be varied according to the shape of the second mold 320. For example, the shape of the first lens surface 1142 may be spherical, aspherical, convex, or concave.

### 2) Forming Light Shielding Layer 130

When the forming of first lens layer 110 is completed, the light shielding layer 130 is formed on the first lens layer 110. In this case, the light shielding layer 130 may be a liquid material which is cured over time or may be a solid material at room temperature.

First, a case in which the light shielding layer 130 is made of a liquid material will be described.

In this case, the light shielding layer 130 may be formed by spraying, printing, or squeezing the liquid material (i . e. , light shielding material) onto the first surface 112 of the first lens layer 110. In this case, a light shielding material 132 (see FIG. 2B) may be sprayed by a sprayer 400 (alternatively, a printer head).

In the exemplary embodiment of the present invention, the light shielding material 132 is applied to the protrusions 1122 of the first surface 112 of the first lens layer 110. The light shielding material 132 may be applied to the portion of the first surface 112, which does not cover the optical axis of the first lens surface 1142. The detailed applying method of the light shielding material 132 is shown in FIGS. 2A to 2C.

In the state in which the first lens layer 110 is completed, an auxiliary frame 500 is mounted on the first surface 112 of the first lens layer 110. In this configuration, the auxiliary frame 500 has a plurality of holes 510. The size of the holes 510 may coincide with that of the protrusion 1122 formed on the first surface 112. The auxiliary frame 500 formed as described above is mounted on the first lens layer 110 in such a manner that only the protrusion 1122 of the first surface 112 is exposed to the outside.

In this state, when the light shielding material is sprayed on or applied to the entire first surface 112 of the first lens layer 110, the light shielding material 132 remains only on the top surface of the protrusion 1122. Therefore, it is possible to effectively prevent the light shielding material from being applied to the groove part 1124 of first lens layer 110 corresponding to the first lens surface 1142.

The light shielding material 132 applied to the protrusion 1122 is cured over time to become the light shielding layer 130 shielding the transmission of light.

For reference, the method of applying the light shielding material 132 as described above is only an example and therefore, may be varied within the scope of not applying the light shielding material on the the groove part 1124.

For example, there is a method of applying the light shielding material 132 to one surface of a flat plate and then contacting the first surface 112 of the first lens layer 110 with the one surface of the flat plate. This method may allow the light shielding material 132 to be smeared alone onto the protrusion 1122 of the first surface 112.

Alternatively, the light shielding layer 130 may be formed by dipping only the protrusion 1122 of the first lens layer 110 into a water tank into which the light shielding material 132 is contained, in the state of overturning the first lens layer 110.

Next, a case in which the light shielding layer 130 is made of a solid material will be described.

In this case, the light shielding layer 130 is manufactured in the form of a film, which in turn may be attached to the first lens layer 110. In this case, the light shielding layer 130 may be manufactured to have a hole corresponding to the groove part 1124.

### 3) Forming Second Lens Layer 120

When the forming of the light shielding layer 130 is completed by the above-mentioned methods, the second lens layer 120 is formed.

The second lens layer 120 may be formed by applying the second lens material 220 to the first lens layer 110. The second lens material 220 is applied in an amount sufficient to include all of the light shielding layers 130 therein.

When the application of the second lens material 220 is completed, the second lens material 220 and the first lens layer 110 are pressurized by using the second mold 320 and the third mold 330, and then the second lens material 220 is cured.

In this case, the second lens material 220 may be the same material as the first lens material 210. However, in some cases, the second lens material 220 may be a heterogeneous material having a refractive index or an abbe value different from either of those of the first lens material 210. In particular, when the first lens material 210 and the second lens material (that is, the first lens layer 110 and the second lens layer 120) have different abbe values, it is easy to correct chromatic aberrations using a completed lens. For reference, a difference between the abbe values may preferably exceed 10, and, more preferably, may be within the range of 10 to 40. This is because that the effect of the chromatic aberration correction is slight when the difference in the abbe values does not exceed 10 and the manufacturing costs of the lens are increased when the difference in the abbe values exceeds 40.

When the second lens material 220 is completely cured, the second lens layer 120 is formed on the first lens layer 110.

The lens 100 manufactured through the above-mentioned process has the light shielding layer 130 installed between the first lens layer 110 and the second lens layer 120, such that a separate light shielding member is not required.

Therefore, through the method of manufacturing a lens according to the exemplary embodiment of the present invention, a functional lens may be manufactured, thereby minimizing the size of the lens module.

Further, according to the exemplary embodiment of the present invention, the light shielding layer 130 may be formed on the small lens 100, thereby minimizing the transmittance of spill light (unnecessary light) through the small lens.

In addition, according to the exemplary embodiment of the present invention, the light shielding layer 130 may be optionally formed by using spraying, printing, or squeezing, such that the size of the light shielding layer 130 may be easily changed.

In addition, according to the exemplary embodiment of the present invention, the optical axis of the small lens 100 may be easily confirmed by using the light shielding layer 130, such that the stacking and aligning processes of the small lenses can be easily performed.

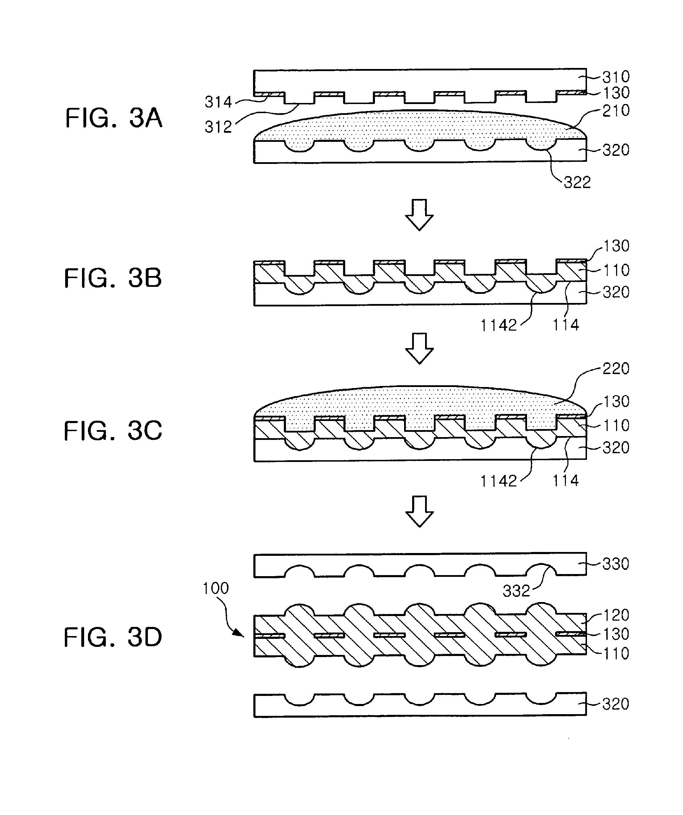

A method of manufacturing a lens according to a second exemplary embodiment of the present invention will be described with reference to FIGS. 3A to 4D. FIGS. 3A to 4D are diagrams respectively showing a method of manufacturing a lens according to a second exemplary embodiment of the present invention. For ease of description, components which are the same as those of first exemplary embodiment of the present invention have the same reference numerals and therefore,a detailed description of these components will be omitted.

The method of manufacturing a lens according to the second exemplary embodiment of the present invention also includes forming the first lens layer 110, forming the light shielding layer 130, and forming the second lens layer 120, similar to the first exemplary embodiment of the present invention. However, the exemplary embodiment of the present invention is different from the first exemplary embodiment in that the forming of the first lens layer 110 and the forming of the light shielding layer 130 are simultaneously performed.

The first lens layer 110 is formed by the first mold 310 and the second mold 320, similar to in the first exemplary embodiment.

However, in the exemplary embodiment of the present invention, the groove part 314 of the first mold 310 has the the light shielding material 132 to form the light shielding layer 130 applied thereto and is provided with the light shielding member to be the light shielding layer 130. The light shielding material 132 may be applied to the groove part 314 by the spraying method, the printing method, or the squeezing method and the light shielding member may be mounted on the groove part 314 in such a manner as to be inserted thereinto.

As described above, when the first lens material 210 is pressurized by the first mold 310 and the second mold 320, and then the first lens material 210 is cured, the lens layer 110 shown in FIG. 3B may be obtained.

The first lens layer 110 is configured to include the protrusion 1122, the groove part 1124, and the first lens surface 1142, similar to in the first exemplary embodiment. However, in the exemplary embodiment of the present invention, the light shielding material 132 or the light shielding layer 130 are formed on the protrusion 1122 together while the first lens layer 110 is formed. In this case, the light shielding layer 130 is formed by the tranferring of the light shielding material 132 formed on the groove part 314 of the first mold 310 to the first surface 112 of the first lens layer 110 during pressurizing the first lens layer 110 through the use of the first mold 310.

That is, in the exemplary embodiment of the present invention, the light shielding layer 130 is formed simultaneously with forming the first surface 112 of the first lens layer 110 by using the first mold 310. Therefore, according to the exemplary embodiment of the present invention, forming the light shielding layer 130 may be simplified.

Next, descriptions with regard to modifications of the second exemplary embodiment will bemade.

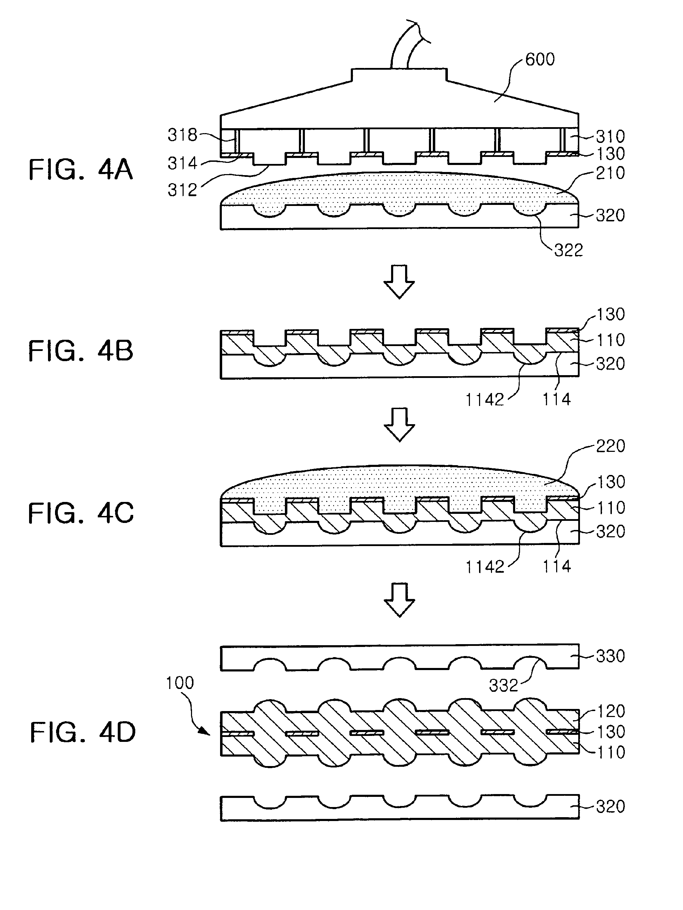

The forming of the first lens layer 110 and the light shielding layer 130 may be performed as shown in FIGS. 4A to 4D. FIGS. 4A to 4D are different from FIGS. 3A to 3D in terms of the shape of the first mold 310, and additionally uses a vacuum device 600.

The first mold 310 according to the exemplary embodiment of the present invention has a plurality of through holes 318 in a vertical direction thereof (based on the direction of FIGS. 4A to 4D). One end of the through hole 318 communicates with the groove part 314 of the first mold 310 and the other end thereof communicates with the vacuum device 600.

The first mode 310 formed as described above has the light shielding layer 130 adhered to the groove part 314 thereof by vacuum pressure of the vaccum device 600. The adhered light shielding layer 130 is separated when the first mold 310 pressurizes the first lens material 210. The separation of the light shielding layer 130 from the first mold 310 may be achieved through the breaking of the vacuum pressure of the vacuum device 600.

In this case, the light shielding layer 130 disposed on the first lens material 210 is firmly fixed to the first lens material 210 in such a manner as to be integrated with the first lens material 210 during the curing of the first lens material 210.

The method of manufacturing a lens shown in FIGS. 4A to 4D are suitable in the case in which the light shielding layer 130 is a thin material like a film. Further, according to the exemplary embodiment of the present invention, the light shielding layer 130 may be separately manufactured and then introduced during manufacturing the lens, such that the process of manufacturing of a lens having the light shielding layer may be shortened.

For reference, processes shown in FIGS. 3B to 3D and 4B to 4D are the same as or similar to processes shown in FIGS. 1C to 1E and therefore, the detailed description of these steps will be omitted.

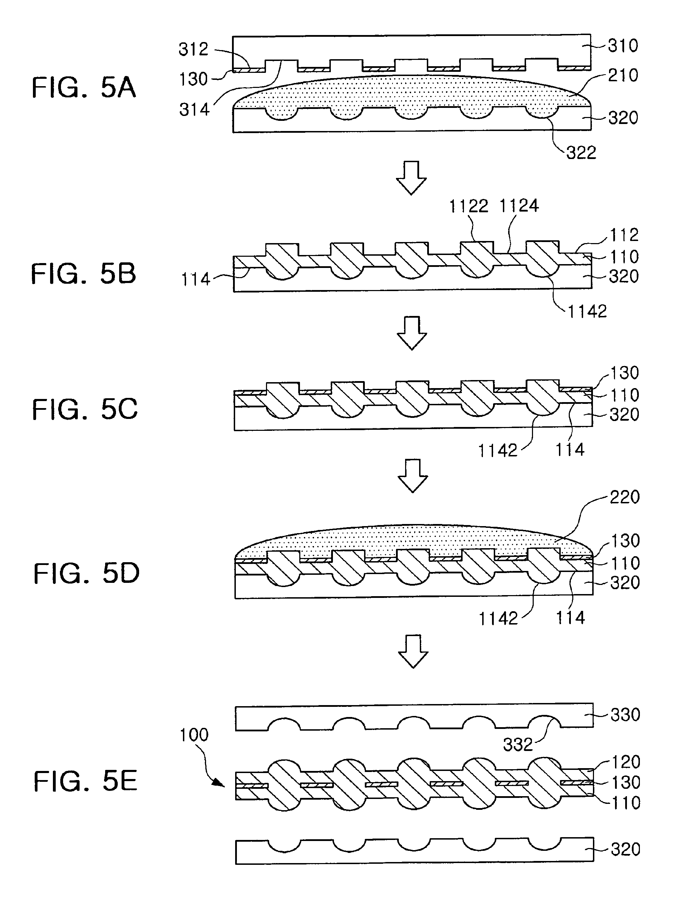

A method of manufacturing a lens according to a third exemplary embodiment of the present invention will be described with reference to FIGS. 5A to 5E. FIGS. 5A to 5E are a diagram showing a method of manufacturing a lens according to a third exemplary embodiment of the present invention. For reference, components which are the same as in the first exemplary embodiment of the present invention have the same reference numerals and therefore, a detailed description of these components will be omitted.

The method of manufacturing a lens according to the third exemplary embodiment of the present invention also includes forming the first lens layer 110, forming the light shielding layer 130, and forming the second lens layer 120, similar to in the first exemplary embodiment of the present invention. However, the exemplary embodiment of the present invention is different from the above-mentioned exemplary embodiments in view of the formation position of the light shield layer 130.

That is, in the method of manufacturing a lens according to the embodiment of the present invention, the light shielding layer 130 is formed on the groove part 1124 of the first lens layer 110. In the formation of the light shielding layer 130, the first mold 310 may be used, similar to in the second exemplary embodiment.

As shown in FIG. 5A, the light shielding layer 130 or the light shielding material 132 is applied or attached to the first mold 310. However, in the exemplary embodiment, the light shielding material 132 is applied to the protrusion 312 of the first mold 310, unlike in the second exemplary embodiment of the present invention.

Thereafter, the first lens material 210 is pressurized by the first mold 310 and the first lens material 210 is cured in the pressurized state. Then, the first lens layer 110 shown in FIG. 5B is formed.

In this case, the light shielding layer 130 is formed on the groove part 1124 of the first lens layer 110, unlike in the above-mentioned exemplary embodiments. However, in this exemplary embodiment, the first lens surface 1142 of the first lens layer 110 is formed to correspond to the protrusion 1122.

For reference, processes of forming the second lens layer 120, shown in FIGS. 5C to 5D, are the same as or similar to processes shown in FIGS. 1D to 1E, and therefore, the detailed description of these steps will be omitted.

The exemplary embodiment of the present invention exemplarily shows that the light shielding layer 130 may be formed on any of the protrusion 1122 and the groove part 1124 of the first lens layer 110. That is, the light shielding layer 130 may be formed in any of the protrusion 112 and the groove part 1124 of the first lens layer 110 in the range in which the optical axis of the lens surface is not interfered.

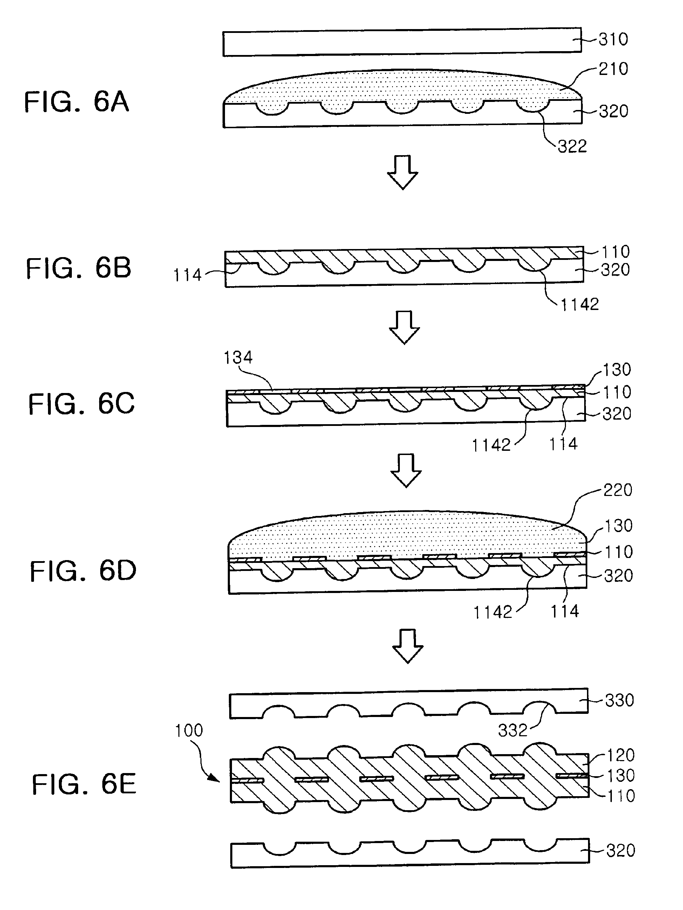

Next, a method of manufacturing a lens according to a fourth exemplary embodiment of the present invention will be described. FIGS. 6A to 6E are a diagram showing a method of manufacturing a lens according to a fourth exemplary embodiment of the present invention. For reference, components which are the same as in the first exemplary embodiment of the present invention have the same reference numerals and a detailed description of these components will therefore be omitted.

In the method of manufacturing a lens according to the fourth exemplary embodiment of the present invention, the light shielding layer 130 is formed on the flat first lens layer 110. Further, in the exemplary embodiment, the light shielding layer 130 has a plurality of holes formed therein.

The holes 134 of the light shield layer 130 have a size corresponding to the first lens surface 1142 of the first lens layer 110. The pitch between the holes 134 is the same as the pitch between the first lens surfaces 1142. The light shielding layer 130 as formed above is mounted on the first lens layer 110 (see FIG. 6C) in such a manner that the holes 134 are disposed on the optical axises of the first lens surfaces 1142.

In this method, since the light shield layer 130 may be formed on the first lens layer 110 by mounting the light shielding layer 130 in the form of a film on the first lens layer 110, the forming of the light shielding layer 130 may be very promptly and conveniently performed.

Meanwhile, the exemplary embodiment of the present invention describes that the light shielding layer 130 is manufactured in the form of a film to be mounted, but the light shielding layer 130 may be formed by spraying, printing, or squeezing the light shielding material, unlike the above-mentioned method.

Processes of forming the second lens layer 120 shown in FIGS. 6D to 6E are the same as processes shown in FIG. 1D to 1E, and therefore, the detailed description of these steps will be omitted.

In the exemplary embodiments of the present invention performed as described above, it is unnecessary to form the protrusion 1122 and the groove part 1124 on the first lens layer 110, whereby the thickness of the first lens layer 110 may be thinner. Further, the second lens layer 120 covering the light shielding layer 130 does not need to be thick by the height of the protrusion 1122, whereby the thickness of the lens including the first lens layer and the second lens layer becomes thin overall. Therefore, the exemplary embodiments of the present invention may be suitable to manufacture the thin lens.

As set forth above, the lens including the light shielding layer can be manufactured. Therefore, according to the exemplary embodiments of the present invention, it is unnecessary to install a separate light shielding member between the lenses, whereby the lens module can be miniaturized.

Further, in the exemplary embodiments of the present invention, the light shielding layer may be installed in the lens, thereby minimizing the transmittance of spill light (unnecessary light).

In addition, according to the exemplary embodiments of the present invention, the optical axis of the lens may be easily confirmed by the light shielding layer installed in the lens, whereby the stacking and aligning processes of the small lenses can be accurately performed.

While the present invention has been shown and described in connection with the exemplary embodiements, it will be apparent to those skilled in the art that modification and variation can be made withough departing from the spirit and scope of the invention as defined by the appended claims.

## Claims

1. A method of manufacturing a lens, the method comprising:
forming a first lens layer having a protrusion and a groove part formed on a first surface thereof;
forming a light shielding layer on the first surface; and
forming a second lens layer on the first surface.

2. The method of claim 1, wherein the light shielding layer is formed on the groove part of the first surface.

3. The method of claim 1, wherein the light shielding layer is formed on the protrusion of the first surface.

4. The method of claim 1, wherein the light shielding layer is formed by spraying, printing, or squeezing a light shield material onto the first surface.

5. The method of claim 1, wherein in the forming of the light shielding layer, a light shielding material is sprayed, printed, or squeezed onto a stamp or a mold having a shape corresponding to the first surface, and the first surface and the light shielding layer are formed by using the stamp or the mold.

6. The method of claim 1, wherein the light shield layer is a structure capable of being inserted into the protrusion or the groove part.

7. A method of manufacturing a lens, comprising:
forming a first lens layer;
forming a light shield layer on a first surface of the first lens layer; and
forming a second lens layer on the first surface.

8. The method of claim 7, wherein the forming of the light shield layer includes:
applying a light shield material to a stamp or a mold forming the first surface; and
pressurizing the first lens layer by the stamp or the mold to simultaneously form the first surface of the first lens layer and the light shielding layer.

9. The method of claim 7, wherein in the forming of the light shield layer, a light shielding member provided with holes corresponding to a lens surface is mounted on one surface of the first lens layer.

10. The method of claim 7, wherein the first lens layer and the second lens layer are made of the same material.
